# EUROPEAN PATENT APPLICATION

(11) **EP 1 681 657 A1**
(43) Date of publication of application: **19.07.2006**
(21) Application number: 06250084.8
(22) Date of filing: 09.01.2006
(51) Int. Cl.: G07B 15/00

(54) **Multifunctional On-board-equipment (OBE) for intelligent transport systems (ITS)**

(30) Priority: 14.01.2005 KR 2005003710; 27.06.2005 KR 2005055567
(71) Applicant: HighGain Antenna Co., Ltd., Danwon-gu Ansan-si, Kyunggi-do 425-852 (KR)
(72) Inventor: Lee, Don Sin, Ansan-si Kyunggi-do 425-859 (KR)
(74) Representative: Gill, Stephen Charles

(57) **Abstract**

A multifunctional on-board equipment (OBE) for an automobile is provided. The OBE includes a GPS terminal to commonly use a case, an electric power and an indicator, and provides a voice service through an internal speaker to notice a position of the automobile, to provide an electric toll collection function, and traffic information by interacting a CPU function of a GPS terminal and a CPU function of the OBE. Also, the OBE includes a MP3 player and a music selection switches for reproducing and outputting music through an internal speaker or an external speaker connected through an audio output terminal while a user drives the automobile. The OBE includes a microprocessor core with predetermined interface software specially designed for the present invention in L1, L2 and L7 layers to reduce a size and a manufacturing cost.

## Description

### BACKGROUND OF THE INVENTION

### Field of the Invention

The present invention relates to an on-board equipment (OBE) for an automobile, and more particularly, to a micro multifunctional on-board equipment (OBE) for an automobile to receive various services through an active dedicated short range communication (DSRC) network. The OBE for a vehicle according to the present invention may be an enhanced on-board equipment (OBE) introduced in a Korea application number 10-2005-003710 which is applied by the present applicant.

### Description of the Related Art

A technology of telematics is a recently introduced technology which is a combination of telecommunication and informatics. The telematics provides various services to a driver and a passenger of an automobile such as traffic information, an emergency rescue service, a remote automobile diagnosis, and an internet service. That is, the telematics provides services for embodying a mobile office.

As a basic equipment of telematics, a navigation terminal using a global positioning system (GPS) is widely spread to automobiles. However, such a GPS navigation terminal cannot provide real-time traffic information.

A communication scheme used in an intelligent transport system (ITS) is classified into a wired communication network, a wireless wide area communication network, a roadside communication network, and an inter-vehicle communication network. Generally, the wired communication network and the wireless wide area communication network are provided as a public communication network. On contrary, the road-side communication network and the inter-vehicle communication network are a dedicated communication network for ITS. A dedicated short range communication network (DSRC) is one of the road-side communication networks. A roadside equipment (RSE) installed at a roadside and an on-board equipment (OBE) mounted on automobile are communicated each other through the DSRC network when the automobile having the OBE enters a communication coverage of the RSE. The OBE for automobile receives real-time traffic information and automatically pay a toll fee based on an electronic toll collection (ETC) by communicating with the RSE through DSRC network.

However, a conventional OBE for the DSRC has limited functions to receive/transmit various services. Also, the conventional terminal for DSRC has a comparatively large because of a conventional memory equipped in the conventional OBE. Also, the conventional OBE is expensive.

### SUMMARY OF THE INVENTION

Accordingly, the present invention is preferably directed to a multifunctional OBE for ITS that substantially obviates one or more problems due to limitations and disadvantages of the related art.

A preferred object of the present invention is to provide a micro multifunctional on-board equipment (OBE) having a global positioning system (GPS) receiver for an active dedicated short range communication (DSRC) network to provide both of the OBE's function and the GPS's function such as positioning information, automobile information including a current speed or an automobile type, traffic information, accounting device information, a MP3 play function, and a navigation function.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To seek to achieve these objects and other advantages and in accordance with the purpose of the invention, as embodied and broadly described herein, there is provided an OBE (on-board equipment) having a GPS (global positioning system) receiver, the OBE being configured for use with an ITS (intelligence transport system) and for communicating with a RSE (roadside equipment) installed at a roadside, a toll booth or a parking lot when the OBE is mounted on an automobile by transmitting/receiving a wireless signal, or an IR (infrared ray) signal, the OBE including: an OBE case for housing internal circuits of the OBE; a GPS receiver for providing a current position of the automobile by receiving navigation data from a GPS satellite through an GPS antenna; a key input unit for inputting predetermined commands to perform target operations of the OBE; a card reader for performing an automatic accounting routine according to an ETC (electric toll collection) to pay a toll fee and a parking fee by using financial information stored in a smart card; a serial communication unit for downloading predetermined data from an external device to update geometric information to providing a navigation service; a speaker for outputting a sound; a micro amplifying MMIC (monolithic microwave integrated circuit) for modulating data to a wireless signal and transmits the wireless signal to the RSE through an OBE antenna; and an integrated microprocessor ASIC (application-specific integrated circuit) for storing a predetermined software to perform a DSRC (dedicated short range communication) protocol, storing a geometric information database to provide a navigation service, storing a real-time traffic information database to provide real-time traffic information, providing traffic information through the speaker as voices by using positioning information transferred from the GPS receiver and data transferred from the micro amplifying MMIC, and providing predetermined functions according to the input of the key input unit, wherein main functions of a GPS terminal including an antenna, a coordinate recognizing CPU (central processing unit), and a POI are mounted in the OBE case to commonly use the OBE case, electric power and an indicator, and a voice service is provided through an internal speaker to inform a position of the automobile, to provide an electric toll collection function, and to provide traffic information by interacting a CPU function of the GPS terminal and a CPU function of the OBE.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1A and 1B are a front view and a side view of a system providing a service to a micro multifunctional on-board equipment (OBE) for an automobile according to an embodiment of the present invention;

FIG. 2 is a block diagram illustrating a micro multifunctional OBE according to an embodiment of the present invention;

FIG. 3A shows the microprocessor shown in FIG. 2 according to a first embodiment of the present invention;

FIG. 3B illustrates the microprocessor according to a second embodiment of the present invention;

FIG. 3C illustrates the microprocessor according to a third embodiment of the present invention;

FIG. 3D is an architecture of software of a micro multifunctional OBE according to the present invention;

FIG. 4 is a flowchart showing general operations of a micro multifunction OBE according to an embodiment of the present invention;

FIG. 5 is a flowchart showing upgrading operation of navigation data of a micro multifunction OBE according to an embodiment of the present invention;

FIG. 6 is a flowchart showing real-time traffic information receiving operations of a micro multifunctional OBE according to an embodiment of the present invention;

FIG. 7 is a flowchart showing an electric toll collection (ETC) operation of a micro multifunctional OBE according to an embodiment of the present invention;

FIG. 8 is a flowchart showing an emergency rescue service providing operation of a micro multifunctional OBE according to an embodiment of the present invention;

FIG. 9 is a flowchart showing a vehicle maintenance service operation of a micro multifunctional OBE according to the present invention; and

FIG. 10 is a flowchart showing a MP3 music service operation of a micro multifunctional OBE according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

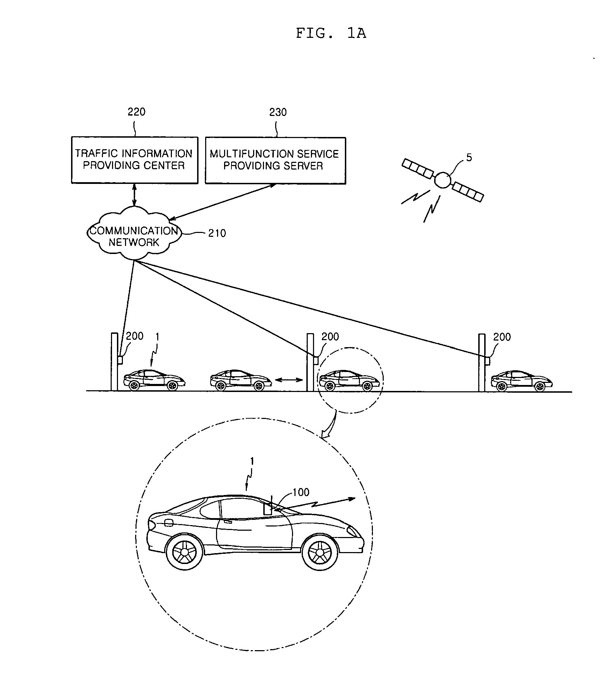

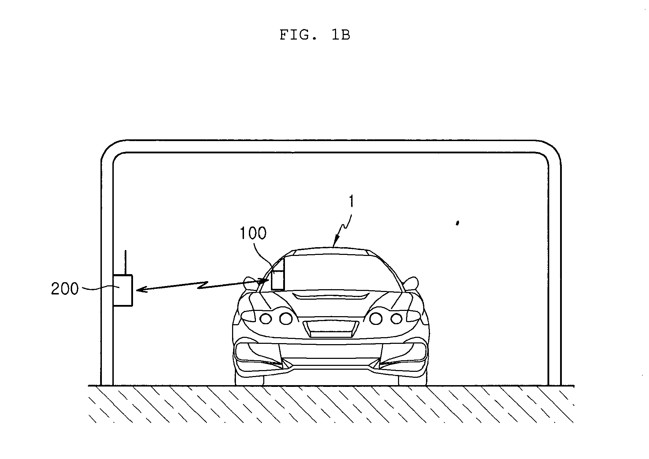

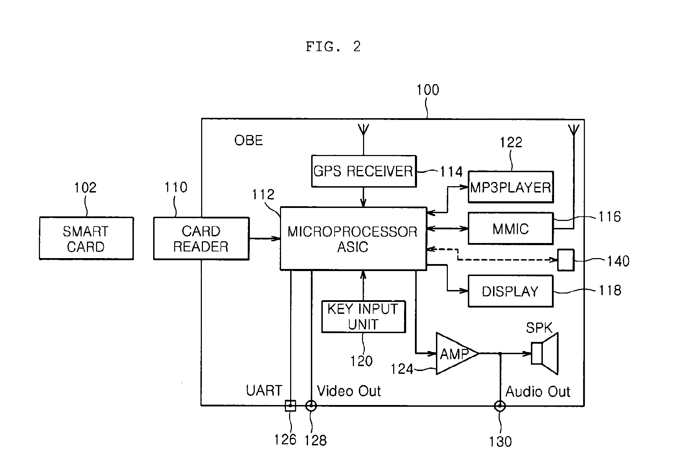

FIGs. 1A and 1B are a front view and a side view of a system providing a service to a micro multifunctional on-board equipment (OBE) for an automobile according to an embodiment of the present invention, and FIG. 2 is a block diagram illustrating a micro multifunctional OBE according to an embodiment of the present invention.

A micro multifunctional on-board equipment (OBE) is a multifunctional on-board equipment (OBE) for an active dedicated short range communication (DSRC) network which is installed in an automobile.

Referring to FIGs. 1A and 1B, the micro multifunctional OBE 100 according to the present embodiment is equipped in an automobile 1. The micro multifunctional OBE 100 provides both of ITS functions and GPS function. That is, the micro multifunctional OBE 100 receives ITS and IR services through the DSRC network, and also provide a navigation service to a driver by receiving positioning data from a satellite 5. That is, a plurality of roadside equipments (RSE) 200 is installed on a roadside within a predetermined distance in order to communicate with the micro multifunctional OBE 100 in an automobile, and the RSE 200 is connected to a traffic information providing center 220 or a multifunction service providing server 230 through a wired/wireless communication network 210. The RSE 200 may be connected to an accounting server (not shown) for providing an electronic or credit card payment service. Furthermore, the RSE 200 may be connected to an emergency rescue service providing system (not shown) such as a police station and a fire station through the communication network 210.

The micro multifunctional OBE 100 provides a navigation service all times by receiving positioning data from the GPS satellite 5 while a user drives the automobile. Also, the micro multifunctional OBE 100 provides various services to the driver or the passenger in the automobile 1 when the automobile 1 having the micro multifunctional OBE 100 enters a communication coverage of a RSE 200. That is, when the automobile 1 enters a communication coverage of the RSE 200, the micro multifunctional OBE 100 communicates with the RSE 200 based on the DSRC protocol to provide an electronic toll collection (ETC) service, an automobile diagnosis service, and a MP3 music service. Furthermore, the micro multifunctional OBE 100 receives real-time traffic information from the traffic information providing center 220 and stores the received information in a traffic information database 302. Therefore, the micro multifunctional OBE 100 according to the present embodiment provides accurate traffic information to the driver because the navigation service is provided with the real-time traffic information to the driver.

Such a micro multifunctional OBE 100 includes a power supply (not shown) for supplying necessary power by using a battery, a circuit for providing predetermined functions when the micro multifunctional OBE 100 is turned-on, and a case (not shown) to mount the micro multifunctional OBE 100 on the automobile 1.

The circuit of the OBE 100 is shown in FIG. 2. That is, the micro multifunctional OBE 100 includes a card reader for reading data stored in a smart card 102; a microprocessor application-specific integrated circuit (ASIC) 112 for providing services of various functions according to the present embodiment; a GPS receiver 114 for providing a navigation service by receiving satellite signal from a satellite through a GPS antenna, demodulating the received satellite signal to extract navigation data, and calculating positioning information based on the extracted navigation data; a monolithic microwave integrated circuit (MMIC) 116 which is a integrated circuit for encoding, decoding, modulating, and demodulating data for transmitting/receiving data to/from the RSE 200; an electric signal-to-optical converting/an optical-to-electric signal converting device 140; a display 118 for displaying various operating states; a key input unit 120 configured with a keypad and a switch for selecting one of functions; a MP3 player 122 for reproducing a MP3 music file; an amplifier 124 for amplifying audio signal; a speaker (SPK); a universal asynchronous receiver/transmitter (UART) 126; a video output terminal 127; and an audio output terminal 130.

Referring to FIG. 2, the smart card 102 stores various information about an automobile, a user and an electric toll collection (ETC) such as a type of the automobile, an address of the user and an amount of money saved for the ETC. The smart card 102 is occasionally inserted into the card reader 110 to provide the stored information. The card reader 110 reads data stored in the smart card 102 and transfers the read data to the microprocessor 112.

The key input unit 120 is an input unit to provide an interface to a user in order to operate the micro multifunctional OBE 100. The key input unit 120 includes a switch for selecting a target function, a button for requesting an emergency rescue, a plurality of buttons for requesting various services, and numeral pad for setting various operations.

The MP3 player 122 downloads MP3 music files from the multifunctional service providing server 230 of the DSRC network or through the UART 126 according to the user's request, and reproduces the downloaded MP3 music files to enable listening music while the user drives the automobile. The UART 126 is a RS-232C communication port or a USB port for downloading and updating geometrical data for navigation from a navigation data updating site by being connected to a corresponding port of a personal computer (PC) or a personal digital assistant (PDA).

The GPS receiver 114 demodulates the satellite signal received through the GPS antenna, extracts navigation data from the demodulated satellite signal and obtains positioning information by calculating a current position of the automobile 1 based on the extracted navigation data. The obtained positioning information is transferred to the micro processor 112.

The speaker (SPK) outputs sounds or voice representing a toll charging state, a remained money or an alarm or outputs the reproduced MP3 music file. The audio output unit 130 outputs audio signals to an external speaker of the automobile.

The display 118 displays a map of the current position, a speed of the automobile and traffic information as texts or graphics. The video output unit 128 outputs video signals to an external display such as a liquid crystal display (LCD) of the automobile to display navigation data. The MMIC 116 communicates with the RSE 200 through a DSRC antenna according to the DSRC wireless protocol. That is, MMIC 116 modulates data received from the micro processor ASIC 112 to a wireless signal of 5.8 HGz band, and transmits the wireless signal to the RSE 200 through an antenna. Also, the MMIC 116 receives a wireless signal from the RSE 200 through an antenna, amplifies the received signal, demodulates the amplified signal, decode demodulated signal, and transfers the decoded data to the microprocessor ASIC 112. If an infrared ray (IR) is used for communicating between the OBE 100 and the RSE 200, data is transmitted to the RSE 200 by electric signal-to-optical converting, and the micro multifunctional OBE 100 receives data by optical-to-electric signal converting. The received data is transferred to the micro processor.

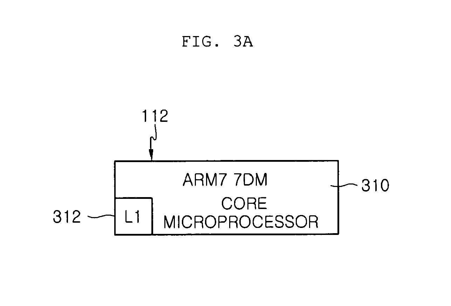

The microprocessor ASIC 112 is shown in FIGs. 3A to 3B. The microprocessor ASIC 112 may be embodied as an ARM type process which is a RISC type processor. An inside memory of the microprocessor ASIC 112 stores software for performing a DSRC protocol, the geometric information database DB for navigation, a real-time traffic information database (DB), automobile information such as a speed and a type of vehicle, and positioning information transferred from the GPS receiver 114. And, the microprocessor ASIC 112 provides various functions according to the input of the key input unit 120. That is, the microprocessor ASIC 112 displays navigation states on the display 118 by using the positioning information received from the GPS receiver 114, the automobile state information such as a speed and a type of vehicle, the geometric information database and the real-time traffic information database.

The micro multifunctional OBE 100 also provides a service for automatically paying a toll fee when the automobile 1 is passed through a highway toll booth. That is, the micro multifunctional OBE 100 reads information about the type of automobile, accounting information, an amount of saved money for automatically paying the toll fee, user information such as an address, and the read data are transferred to the microprocessor 112. The microprocessor 112 processes the provided information with external inputs, and transmits the processed information to the RSE 200 or a repeater through the MMIC 116. Also, the navigation information is displayed on the display 118, or is outputted through the speaker (SPK). Occasionally, the information is provided to an external display or an external speaker through the audio output terminal 128 or the video output terminal 130.

The micro multifunctional OBE 100 may include the antenna, a coordinate recognizing CPU, a point of intered (POI) inside of the OBE 100 to commonly use other indicator, a power supply, a case and an antenna for reducing a manufacturing cost. The micro multifunction OBE 100 can be updated by downloading additional data through the UART 126 when new traffic information needs to be updated.

A video monitor can be connected through the video output terminal 128 for guiding a traffic map. Also, a state of road, a main building, and a location of a building can be provided through the speaker (SPK) or the LCD 118 as a voice and a text while driving the automobile.

Furthermore, the MP3 player 122 reproduces the MP3 music files while driving so as the driver to listen music through the speaker.

The user may select various functions such as the GPS function, the MP3 function, the traffic information providing function by using the selection switch of the key input unit 120. Moreover, the automatic toll fee paying function is performed while other functions of the OBE 100 are performed.

As described above, the microprocessor 112 can be embodied as various forms as shown in FIGs. 3A to 3C.

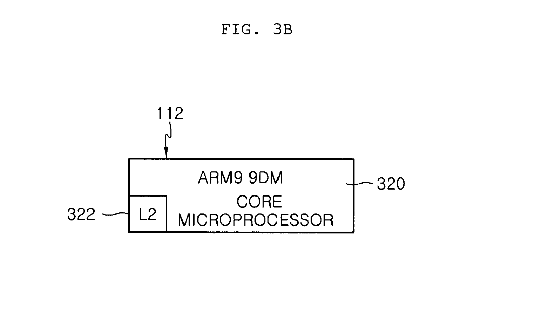

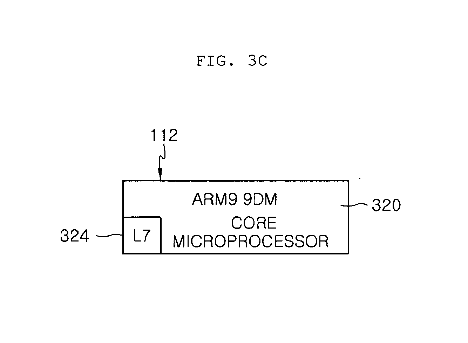

FIG. 3A shows the microprocessor shown in FIG. 2 according to a first embodiment of the present invention, and FIG. 3B illustrates the microprocessor according to a second embodiment of the present invention. FIG. 3C illustrates the microprocessor according to a third embodiment of the present invention.

Referring to FIG. 3A, the microprocessor 112 according to the first embodiment includes an ARM7 7DM core microprocessor 310, a predetermined interface software designed according to the OBE 100 of the present invention as a L1 layer communication protocol, and a PLL control software for providing the automatic toll-fee paying service and the traffic information.

Referring to FIG. 3B, the microprocessor 112 according to the second embodiment includes an ARM9 9DM core processor 320, a predetermined interface software designed for the OBE 100 of the present invention as logic software of a L2 layer communication protocol, digital software and memory software for enhancing the performance.

Referring to FIG. 3C, the microprocessor 112 according to the third embodiment includes an ARM9 9DM core microprocessor 320 a predetermined interface software designed for the OBE 100 of the present invention as an application program of a L7 layer communication protocol, and supplementary software for a vehicle diagnosis, a CAN interface, and a MP3 player for providing various functions.

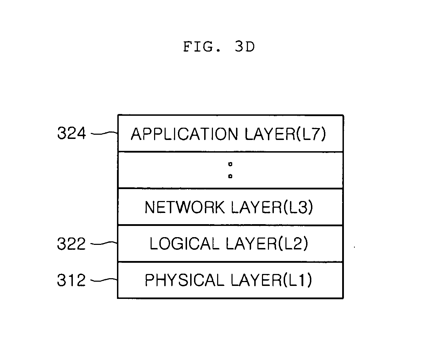

FIG. 3D is an architecture of software of a micro multifunctional OBE according to the present invention. Referring to FIG. 3D, the software of the micro multifunctional OBE include 7 layers L1 to L7. That is, the software according to the present invention includes a physical layer L1, a logical layer L2, a network layer L3, ..., an application layer L7.

The conventional OBE includes a central processing unit (CPU) designed as 2 bands by a UART. So, additional equipments are required to provide supplementary functions. Therefore, a manufacturing cost of the conventional OBE increases. However, the micro multifunctional OBE according to the present embodiment includes the microprocessor 112 designed as more than 4 bands for providing supplementary functions without requiring additional equipments. Therefore, the micro multifunctional OBE according to the present embodiment is comparatively cheaper than the conventional OBE, for example, 1/4 cheaper than the conventional OBE.

Furthermore, a GPS receiver antenna, an OBE antenna and a MP3 chip are mounted at externally in the conventional OBE. Therefore, additional case and power supply are required for the conventional OBE. However, such functions are included inside of the micro multifunctional OBE according to the present embodiment to commonly use the electric power, the case and the indicator. Therefore, the micro multifunctional OBE is cheaper than the conventional OBE, for example 1/3 cheaper than the conventional OBE.

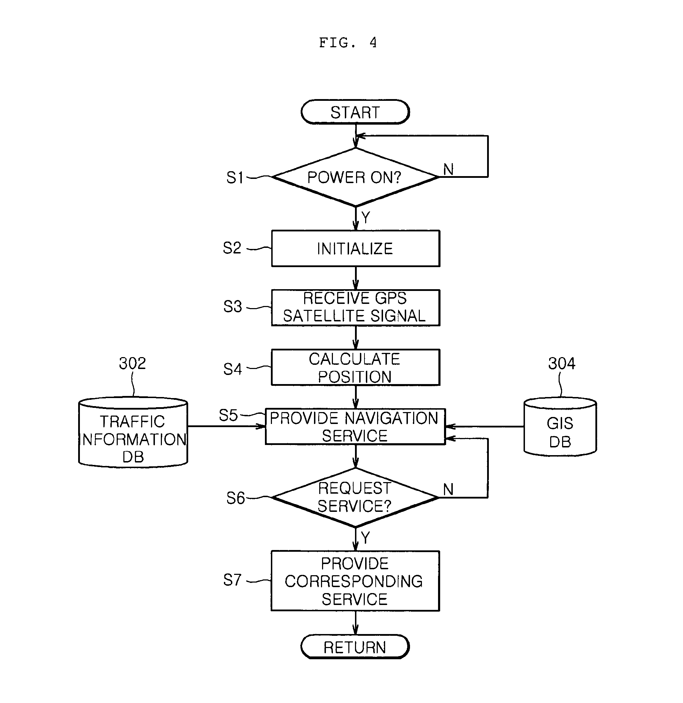

Hereinafter, a method for providing services by a micro multifunctional OBE according to the present invention will be explained with reference to FIGs. 4 to 10.

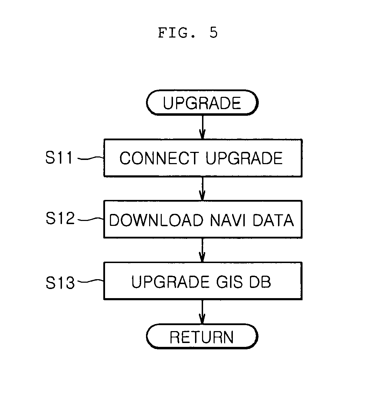

FIG. 4 is a flowchart showing general operations of a micro multifunction OBE according to an embodiment of the present invention, and FIG. 5 is a flowchart showing upgrading operation of navigation data of a micro multifunction OBE according to an embodiment of the present invention.

When an automobile having the micro multifunctional OBE according to the present embodiment is traveling a road where the RSEs 200 connected within the DSRC network, the micro multifunctional OBE 100 is turned-on and is initialized at the steps S1 and S2. The GPS receiver 114 receives navigation signals transmitted from the GPS satellite 5 through the GPS antenna and processes the received navigation data to calculate a current position of the automobile at step S3. The microprocessor ASIC 112 displays a map of the current position of the automobile on a LCD by using a pre-stored geometric information database 304 and the vehicle state information, and also the current position of the automobile and the speed of the automobile are displayed on the LCD at step S5. Herein, the micro multifunctional OBE 100 also provides real-time traffic information received through the DSRC network and stored in the real-time traffic information database 302 by displaying the real-time traffic information on the LCD with the map of current position.

When a user or a server requests a predetermined service, a predetermined set of operations performed to provide requested service at steps S6 and S7. These services may be not only to provide navigation information and real-time traffic information but also to provide a vehicle maintenance service, an emergency rescue service, an automatic toll-fee paying service, an automatic parking-fee paying service, a MP3 music service, an Internet service, an broadcasting service, a direction, speed, positioning information providing service, an toll-gate charging device information providing service.

The micro multifunctional OBE 100 also upgrades navigation data for providing accurate geometric information and traffic information. As shown in FIG. 5, the UART 126 of the micro multifunctional OBE 100 is connected to a PC or a PDA, accesses a traffic information update site through the Internet, downloads the updated navigation data and upgrades the GIS DB 304 at steps S11 to S13. As described above, the micro multifunctional OBE 100 occasionally upgrades the navigation data.

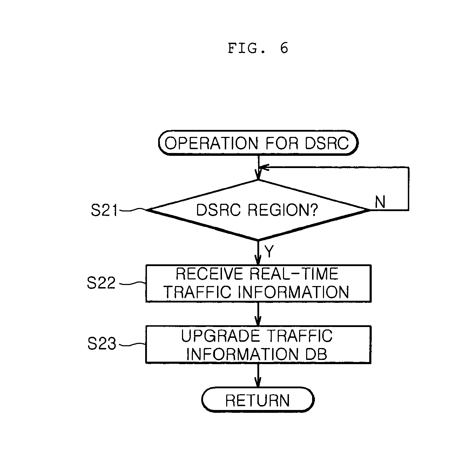

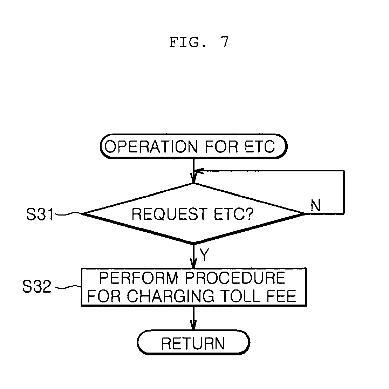

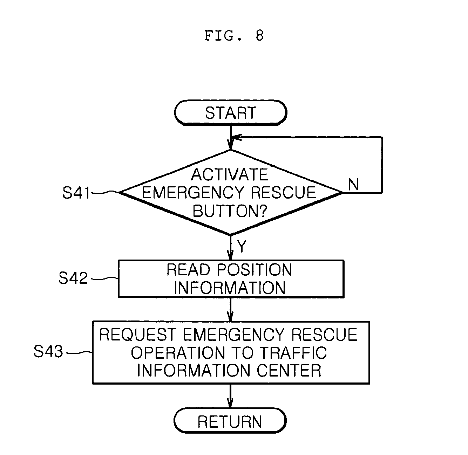

FIG. 6 is a flowchart showing real-time traffic information receiving operations of a micro multifunctional OBE according to an embodiment of the present invention, and FIG. 7 is a flowchart showing an electric toll collection (ETC) operation of a micro multifunctional OBE according to an embodiment of the present invention. FIG. 8 is a flowchart showing an emergency rescue service providing operation of a micro multifunctional OBE according to an embodiment of the present invention.

The micro multifunctional OBE 100 is generally operated as a navigation mode. When the micro multifunctional OBE 100 enters a communication coverage of the RSE 200, the MMIC 116 receives the wireless signal of the RSE 200 and communicates with the RSE 200 according to the DSRC protocol. The real-time traffic information of the traffic information center 220 is transferred to the MMIC 116 of the OBE 100 through the RSE 200. The MMIC 116 demodulates the wireless signal received through the OBE antenna and transfers the demodulated data to the microprocessor ASIC 112. The microprocessor ASIC 112 decodes the demodulated data and upgrades the traffic information DB 303 by referring to decoded data while providing the navigation service at steps S21 to S23.

When the OBE 100 and the RSE 200 are communicated each other by using the IR, the OBE 100 converts the electric signal to the optical signal and transmits the optical signal to the RSE 200. Or the OBE 100 converts the optical signal from the RSE 200 to the electric signal and transfers the electric signal to the microprocessor.

Meanwhile, if the RSE 200 is installed at a toll booth, the ETC service is processed as shown in FIG. 7. The ETC service is an automatic toll fee paying service. That is, a toll-fee is calculated by using toll road entrance information, and charging of corresponding toll-fee is requested. Accordingly, the micro multifunctional OBE 100 pay the toll fee based on financial information recorded in the smart card 102 by using the card reader 110 at steps S31 and S32. The toll fee may pay by using an electric banking service through a bank account or a credit card of the user.

If the emergency rescue service is required by activating a corresponding button of the micro multifunctional OBE 100, the micro multifunctional OBE 100 transmits an emergency rescue requesting signal to the traffic information center 220 with the current position information of the automobile through the DSRC network by reading the current position calculated from the GPS receiver 114 at steps S31 to S33 as shown in FIG. 8. Accordingly, the traffic information center 220 transmits the emergency rescue requesting signal to a police station or a fire station located near the current position of the automobile in order to perform an emergency rescue operation.

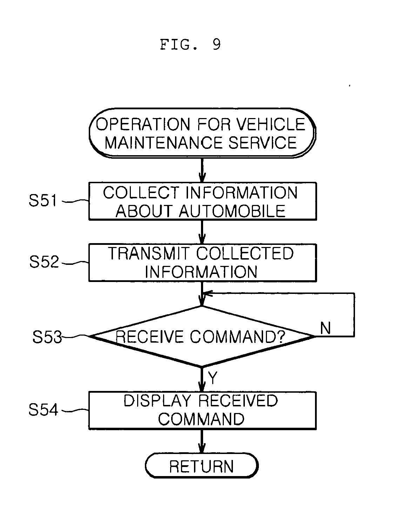

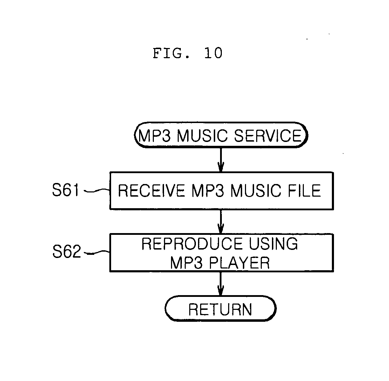

FIG. 9 is a flowchart showing a vehicle maintenance service operation of a micro multifunctional OBE according to the present invention and FIG. 10 is a flowchart showing a MP3 music service operation of a micro multifunctional OBE according to the present invention.

Referring to FIG. 9, if the vehicle maintenance service is requested by a user's key activation or a server's command, various information about states of automobile such as a speed and a type of the automobile are collected and transmitted to a multifunction service server 230. The multifunction server 230 transmits a predetermined command when necessary operations are required after analyzing the current state of the automobile based on the collected information. And, the micro multifunctional OBE 100 receives the predetermined command and displays the received commands on the LCD at steps S51 to S54. Accordingly, the user may rapidly perform necessary maintenance operations.

When a user requests the MP3 music service, MP3 music files are downloaded from the multifunction service providing server 230 or the stored MP3 music files are reproduced using the MP3 player 122. The reproduced MP3 music files are amplified by the amplifier 124 and outputted through the speaker (SPK).

The antenna and the speaker may be included in the micro multifunctional OBE 100, or they are mounted on a window of the automobile using a cable. Also, the micro multifunctional OBE 100 may be mounted on a predetermined location on a dashboard near by the driver to conveniently control a volume.

As described above, the micro multifunctional OBE according to the present invention provides various services such as the navigation service, the real-time traffic information, the ETC service, the vehicle maintenance service and the MP3 music service. Also, it is easy to mount the micro multifunctional OBE 100 in the automobile and to use the micro multifunctional OBE according to the present invention.

Also, a manufacturing cost of the micro multifunctional OBE is comparatively cheaper than the conventional OBE. The conventional OBE includes a central processing unit (CPU) designed as 2 bands by a UART. So, additional equipments are required to provide supplementary functions. However, the micro multifunctional OBE according to the present invention includes the microprocessor 112 designed as more than 4 bands for providing supplementary functions without requiring additional equipments. Therefore, the micro multifunctional OBE according to the present embodiment is comparatively cheaper than the conventional OBE.

Furthermore, a GPS receiver antenna, an OBE antenna and a MP3 chip are mounted at externally in the conventional OBE. Therefore, additional case and power supply are required for the conventional OBE. However, such functions are included inside of the micro multifunctional OBE according to the present invention to commonly use the electric power, the case and the indicator. Therefore, the micro multifunctional OBE according to the present invention is cheaper than the conventional OBE.

It will be apparent to those skilled in the art that various modifications and variations can be made in the present invention.

## Claims

1. An OBE (on-board equipment) having a GPS (global positioning system) receiver in an ITS (intelligence transport system) configured with the OBE and a RSE (roadside equipment) installed at a roadside, a toll booth or a parking lot for communicating with the OBE mounted on an automobile by transmitting/receiving a wireless signal, or an IR (infrared ray) signal, the OBE comprising:
an OBE case for housing internal circuits of the OBE;
a GPS receiver for providing a current position of the automobile by receiving navigation data from a GPS satellite through an GPS antenna;
a key input unit for inputting predetermined commands to perform target operations of the OBE;
a card reader for performing an automatic accounting routine according to an ETC (electric toll collection) to pay a toll fee and a parking fee by using financial information stored in a smart card;
a serial communication unit for downloading predetermined data from an external device to update geometric information to providing a navigation service;
a speaker for outputting a sound;
a micro amplifying MMIC (monolithic microwave integrated circuit) for modulating data to a wireless signal and transmits the wireless signal to the RSE through an OBE antenna; and
an integrated microprocessor ASIC (application-specific integrated circuit) for storing a predetermined software to perform a DSRC (dedicated short range communication) protocol, storing a geometric information database to provide a navigation service, storing a real-time traffic information database to provide real-time traffic information, providing traffic information through the speaker as voices by using positioning information transferred from the GPS receiver and data transferred from the micro amplifying MMIC, and providing predetermined functions according to the input of the key input unit,
wherein main functions of a GPS terminal including an antenna, a coordinate recognizing CPU (central processing unit), and a POI are mounted in the OBE case to commonly use the OBE case, electric power and an indicator, and a voice service is provided through an internal speaker to inform a position of the automobile, to provide an electric toll collection function, and to provide traffic information by interacting a CPU function of the GPS terminal and a CPU function of the OBE.

2. The OBE of claim 1, wherein the OBE includes a MP3 player in the OBE case and a music selection switches prepared on the key input unit for reproducing and outputting music through an internal speaker or an external speaker connected through an audio output terminal while a user drives the automobile.

3. The OBE of claim 1 or 2, wherein the OBE antenna and the GPS antenna are mounted inside the OBE case, and an electric signal-to-optical signal converting and transmitting unit and an optical electric signal receiving unit are included in the OBE to communicate with a receiving/transmitting device of the RSE when the OBE and the RSE are communicated using the IR signal.

4. The OBE of any one of the previous claims, wherein the integrated microprocessor ASIC is a microprocessor core having a same or enhanced performance to an ARM7 7DM with a predetermined software designed for the OBE as a L1 layer communication protocol, where the microprocessor core is designed to more than UART (universal asynchronous receiver/transmitter) four bands in order to add a PLL (phase locked loop) frequency stabilizing controller.

5. The OBE of any one of claims 1 to 3, wherein the integrated microprocessor ASIC is a microprocessor core having a same or enhanced performance to an ARM7 7DM or an ARM9 9DM with a predetermined software designed form the OBE as a L2 layer communication protocol, a digital function and a memory function in order to miniaturize and reduce a manufacturing cost.

6. The OBE of any one of claims 1 to 3, wherein the integrated microprocessor ASIC is a microprocessor core having a same or enhanced performance to an ARM7 7DM or an ARM9 9DM with a predetermined software designed for the OBE as a L7 layer communication protocol to embody a vehicle diagnosis function, a CAN interface function and a MP3 function.

7. The OBE of any one of the previous claims, wherein the OBE further comprising:
a serial communication port for downloading predetermined data from an external device to enhance a service when updating or modifying navigation and traffic information are requested while a GPS service is provided by embedding a GPS terminal in the OBE; and
a video output terminal and an audio output terminal for outputting navigation video signal to an external video monitor.

8. The OBE of any one of the previous claims, wherein the OBE case includes functional switches for selecting one of an OBE function, a GPS function and a MP3 function, for selecting one of an internal speaker and an external speaker, and for controlling a volume of reproduced music and a brightness of a liquid crystal display (LCD).

9. The OBE of any one of claims 1 to 8, wherein the OBE communicates with the RSE based on one of an ITS radio frequency transmitting scheme and an IR optical transmitting scheme, or based on both of the ITS radio frequency transmitting scheme and the IR optical transmitting scheme.
